# EUROPÄISCHE PATENTANMELDUNG

(11) **EP 0 709 471 A1**
(43) Veröffentlichungstag der Anmeldung: **01.05.1996**
(21) Anmeldenummer: 95116139.7
(22) Anmeldetag: 13.10.1995
(51) Int. Cl.: C22B 3/00, C22B 34/12, B01D 11/04, C01G 23/00

(54) **Verwendung von Diethyldodecanphosphonat zur Extraktion von Säuren und Metallsalzen aus wässrigen Lösungen**

(30) Priorität: 26.10.1994 DE 4438174
(71) Anmelder: BAYER AG, D-51368 Leverkusen (DE)
(72) Erfinder: Holzner, Christoph, Dr., D-51061 Köln (DE); Block, Hans-Dieter, Dr., D-51381 Leverkusen (DE); Moretto, Hans-Heinrich, Prof. Dr., D-51375 Leverkusen (DE)

(57) **Zusammenfassung**

Die vorliegende Erfindung betrifft die Verwendung von Diethyldodecanphosphonat (DEDP) zur Extraktion von Säuren und Metallsalzen aus wäßrigen Lösungen.

## Beschreibung

Die vorliegende Erfindung betrifft die Verwendung von Diethyldodecanphosphonat (C₁₂H₂₅P(O)(OC₂H₅)₂; DEDP) zur Extraktion von Säuren und Metallsalzen aus wäßrigen Lösungen.

Tributylphosphat (TBP) findet in der Technik Verwendung als Extraktionsmittel für Phosphorsäure, Uran, Seltene Erden, Zink, Eisen und andere Metalle (Science and Technology of Tributyl Phosphate; W.W. Schulz, J.D. Navratil; CRC Press, Boca Raton, Florida (1987) Vol. II A, S. 65-121). Die Extraktionswirkung beruht auf der Bildung lipophiler Solvate mit den elektrisch neutralen Säuremolekülen oder den Metallsalzen. Zahlreiche Metalle wie Zink oder Eisen bilden in salzsaurer Lösung Chlorokomplexe, die z.B. als ZnCl₂·2TBP oder HFeCl₄·2TBP mit hohen Verteilungskoeffizienten C_{organisch}/C_{wäßrig} extrahiert werden. Lanthaniden oder Actiniden bilden in salpetersaurer Lösung stabile Nitratokomplexe, die ebenfalls mit hohen Verteilungskoeffizienten extrahiert werden. In derartigen Fällen werden mit Tributylphophat befriedigende Extraktionsausbeuten erhalten.

Anders verhält es sich mit sulfathaltigen Lösungen. Sulfatkomplexe sind in der Regel weniger stabil als Chloro- oder Nitratokomplexe, weshalb die Extraktion nahezu aller Metalle aus schwefelsaurer Lösung bei Verwendung von TBP nur mit niedrigen Verteilungskoeffizienten möglich ist. Niedrige Verteilungskoeffizienten werden auch für die Extraktion der meisten Säuren beobachtet. Die Wirtschaftlichkeit solcher Extraktionsprozesse wird durch die niedrigen Verteilungskoeffizienten bzw. niedrigen Extraktionsausbeuten in Frage gestellt.

Es wurde daher in der Patentliteratur vorgeschlagen, für schwerer extrahierbare Spezies wie Titanylsulfat in schwefelsaurer Lösung andere Extraktionsmittel wie Dibutylbutanphosphonat (DBBP) zu verwenden (DE-OS 3 643 711). Dibutylbutanphosphonat führt zu höheren Verteilungskoeffizienten als TBP, hat aber den Nachteil der höheren Wasserlöslichkeit. So beträgt die Wasserlöslichkeit von reinem TBP in reinem Wasser 400 mg/l, von reinem DBBP 1 200 mg/l. Dipentylpentanphosphonat (DPPP) und Dibutyloctanphosphonat (DBOP) sind bezüglich ihrer Wasserlöslichkeit von 100 mg/l bzw. 10 mg/l zwar bedeutend besser als DBBP, mit ihren ebenfalls niedrigen Verteilungskoeffizienten fallen sie aber gegenüber DBBP deutlich ab.

Aufgabe der vorliegenden Erfindung war es daher, ein geeignetes Extraktionsmittel für die schwer extrahierbaren Spezies zu finden, das außerdem einfach herstellbar ist und extrem niedrige Wasserlöslichkeit und hohe Verteilungskoeffizienten aufweist. Diese Aufgabe konnte durch die Verwendung von Diethyldodecanphosphonat als Extraktionsmittel gelöst werden.

Gegenstand der Erfindung ist die Verwendung von Diethyldodecanphosphonat (DEDP) als Extraktionsmittel für Säuren und Metallsalze aus wäßrigen Lösungen.

Als DEDP kann das isomerenreine Umsetzungsprodukt aus Triethylphosphit und 1-Chlordecan oder das Umsetzungsprodukt aus 1-Dodecen und Diethylphosphit verwendet werden, welches neben Diethyl-n-dodecanphosphonat als Hauptkomponente noch weitere C₁₂-isomere Verbindungen enthalten kann.

DEDP kann als Extraktionsmittel entweder unverdünnt oder verdünnt mit einem Lösungsmittel aus der Gruppe der aliphatischen, alicyclischen oder aromatischen Kohlenwasserstoffe eingesetzt werden. Zur Vermeidung der Bildung einer dritten Phase kann bei Bedarf auch ein Lösungsvermittler (Modifier), wie z.B. Isodecanol oder Nonylphenol, zugesetzt werden.

DEDP kann vorzugsweise auch im Gemisch mit anderen neutralen, sauren oder basischen Extraktionsmitteln eingesetzt werden. So kann beispielsweise ein Gemisch von DEDP mit dem neutralen Extraktionsmittel Tributylphosphat zur Extraktion von Phosphorsäure eingesetzt werden. Ein Gemisch von DEDP mit dem sauren Extraktionsmittel Di(2-ethylhexyl)phosphorsäure kann zum Beispiel zur Extraktion von Molybdän aus mineralsauren Lösungen eingesetzt werden. DEDP kann beispielsweise auch als Modifier bei der Extraktion mit langkettigen Aminen Verwendung finden.

Die zu extrahierenden Säuren können sowohl anorganische als auch organische Säuren sein.

Der Terminus anorganische Säuren umschließt die starken Mineralsäuren, wie z.B. H₃PO₄, H₂SO₄, HNO₃ oder HCl, die schwachen Säuren, wie z.B. H₃BO₃ oder H₂O₂ sowie sauerstoffhaltige Säuren zahlreicher Metalle, Halbmetalle und Nichtmetalle, wie z.B. HReO₄, H₂SeO₄ oder HClO₄. Letztere Säuren werden bevorzugt von den Elementen der 4. bis 8. Nebengruppe und 5. bis 7. Hauptgruppe des Periodensystems der Elemente gebildet, da diese Elemente bevorzugt in ihren höheren Oxidationsstufen saure oder amphotere Oxide bzw. Hydroxide bilden. Die Extraktion der letztgenannten Säuren verläuft besonders dann mit hohen Ausbeuten, wenn in der wäßrigen Phase zusätzlich eine Mineralsäure, wie z.B. H₂SO₄, anwesend ist.

Der Terminus organische Säuren umfaßt mono- und polyfunktionelle Carbonsäuren, Hydroxycarbonsäuren, Aminocarbonsäuren, Sulfonsäuren, Phenole, Thiole und Alkohole.

Die extrahierbaren Metallsalze umfassen alle Salze der Metalle und Halbmetalle des Periodensystems mit Ausnahme der Salze der Alkali- und Erdalkalimetalle.

Aus chloridhaltigen Lösungen werden bevorzugt die Salze der Metalle und Halbmetalle der 3. bis 6. Hauptgruppe des Periodensystems mit Ausnahme von Aluminiumsalzen sowie die Salze der Metalle der 1. bis 3. und 8. Nebengruppe sowie der Actiniden extrahiert.

Aus nitrathaltigen Lösungen werden bevorzugt die Salze von Scandium, Yttrium, Lanthan, der Lanthaniden sowie der Actiniden extrahiert.

Aus schwefelsauren oder salpetersauren Lösungen werden vorzugsweise die Salze der Metalle der 2. und 4. bis 8. Nebengruppe des Periodensystems extrahiert, sofern diese Metalle in höheren Oxidationsstufen vorliegen, sowie die Salze der Metalle und Halbmetalle der 4. bis 6. Hauptgruppe des Periodensystems. Höhere Oxidationsstufen bedeuten in diesem Zusammenhang, daß die positive Oxidationszahl des Metalls gleich der Gruppennummer G_{M} des Metalls innerhalb des Periodensystems oder der um eins erniedrigten Gruppennummer G_{M}-1 ist; beispielsweise Ti(IV), V(V) oder Cr(VI).

Das Periodensystem ist dabei so aufgebaut, daß die Gruppen folgende Bedeutung haben:

| | | |
|---|---|---|
| 1. Nebengruppe: | Cu, Ag, Au | G_{M} = 1 |
| 2. Nebengruppe: | Zn, Cd, Hg | G_{M} = 2 |
| 3. Nebengruppe: | Sc, Y, La, Ac | G_{M} = 3 |
| 4. Nebengruppe: | Ti, Zr, Hf | G_{M} = 4 |
| 5. Nebengruppe: | V, Nb, Ta | G_{M} = 5 |
| 6. Nebengruppe: | Cr, Mo, W | G_{M} = 6 |
| 7. Nebengruppe: | Mn, Te, Re | G_{M} = 7 |
| 8. Nebengruppe: | Fe, Ru, Os Co, Rh, Ir Ni, Pd, Pt | G_{M} = 8 |

| | |
|---|---|
| 1. Hauptgruppe: | Li, Na, K, Rb, Cs, Fr |
| 2. Hauptgruppe: | Be, Mg, Ca, Sr, Ba, Ra |
| 3. Hauptgruppe: | B, Al, Ga, In, Tl |
| 4. Hauptgruppe: | C, Si, Ge, Sn, Pb |
| 5. Hauptgruppe: | N, P, As, Sb, Bi |
| 6. Hauptgruppe: | O, S, Se, Te, Po |
| 7. Hauptgruppe: | F, Cl, Br, J, At |
| 8. Hauptgruppe: | Ne, Ar, Kr, Xe, Rn |

In allen diesen Anwendungen hat DEDP gegenüber den eingangs erwähnten Extraktionsmitteln TBP, DBBP und DPPP den Vorteil einer extrem niedrigen Wasserlöslichkeit. Obwohl Diethyldodecanphosphonat (DEDP) nur über ein Kohlenstoffatom mehr verfügt als Dipentylpentanphosphonat (DPPP), fällt seine Wasserlöslichkeit mit 5 mg/l um den Faktor 20 niedriger aus. Auch das Dibutyloctanphosphonat (DBOP) hat trotz gleicher Zahl von Kohlenstoffatomen wie DEDP eine doppelt so hohe Wasserlöslichkeit wie DEDP. Die zunächst naheliegende Vermutung, DEDP sei durch die Anwesenheit der beiden Ethoxygruppen im Molekül hydrolyseempfindlicher als DPPP oder DBOP, konnte durch vergleichende Messungen widerlegt werden. Die Verbindungen DEDP, DPPP und DBOP zeigen bei 40 °C in 3 Mol/l H₂SO₄ auch nach 6 Wochen keine Zersetzungserscheinungen. Die Phasentrennung verläuft hingegen bei DEDP deutlich rascher und vollständiger als mit DPPP oder DBOP.

Zusammenfassend läßt sich feststellen, daß DEDP gegenüber vergleichbaren Dialkylalkanphosphonaten wie DBBP, DPPP und DBOP eine deutlich niedrigere Wasserlöslichkeit bei gleichbleibender Hydrolysebeständigkeit sowie außerdem ein besseres Phasentrennverhalten zeigt. Bei der Verwendung von DEDP hat man besonders niedrige Verluste an Extraktionsmittel während des Extraktionsprozesses, was die Wirtschaftlichkeit des Verfahrens besonders erhöht. Die vorgenannten Vorteile betreffen alle Extraktionsprozesse, unabhängig von der Art der extrahierten Spezies.

Ein weiterer Vorteil bei der Verwendung von DEDP zeigt sich bei der Extraktion von Verbindungen der Elemente der 2. und 4. bis 8. Nebengruppe, sofern diese in höheren Oxidationsstufen vorliegen, sowie bei der Extraktion von Verbindungen der Metalle und Halbmetalle der 4. bis 6. Hauptgruppe des Periodensystems.

Normalerweise werden diese Elemente aus schwefel- oder salpetersaurer Lösung von gängigen Extraktionsmitteln wie TBP oder DBBP nur mit sehr niedrigen Verteilungskoeffizienten extrahiert. Erwünscht sind aber höhere Verteilungskoeffizienten bei gleichzeitig niedriger Säurekonzentration in der Lösung. DEDP zeigt auch bei diesen Anwendungen höhere Verteilungskoeffizienten als DBBP, was äußerst überraschend ist, da DEDP eine wesentlich höhere Molmasse aufweist als DBBP und demnach niedrigere Verteilungskoeffizienten verglichen mit DBBP zu erwarten wären. Völlig erwartungsgemäß verhält sich dagegen DBOP. Bei gleicher Molmasse wie DEDP zeigt es deutlich niedrigere Verteilungskoeffizienten als DBBP. Das gegensätzliche Verhalten von DBOP und DEDP ist insofern überraschend, da beide Verbindungen eine unsymetrische Alkylsubstitution und die gleiche Molmasse bzw. die gleiche Anzahl von Kohlenstoffatomen aufweisen. Beispiel 1 und Tabelle 1 verdeutlichen dies beispielsweise anhand der Titan(IV)-Extraktion aus schwefelsaurer Lösung. Aus Tabelle 1 geht hervor, daß speziell bei niedrigen Schwefelsäurekonzentrationen höhere Verteilungskoeffizienten für DEDP beobachtet werden als für DBBP und DBOP. Dies ist besonders deshalb vorteilhaft, weil die Löslichkeit von Titanylsulfat in Schwefelsäure bei hohen H₂SO₄-Konzentrationen deutlich abnimmt, wodurch der obere Konzentrationsbereich für eine Titanextraktion nur in Ausnahmefällen in Frage kommt.

Höhere Verteilungskoeffizienten als für DBBP und DBOP werden auch bei der Phosphorsäure- oder Salzsäure-Extraktion beobachtet (siehe Tabellen 2 und 3).

Die Reextraktion der Metallsalze und Säuren erfolgt in bekannter Weise durch kontaktieren der organischen Phase mit Wasser oder mit einer wäßrigen basischen Lösung, enthaltend z.B. NaOH, NaHCO₃, K₃PO₄, NH₃ oder andere basische Substanzen. Die Reextraktion kann auch bei einer gegenüber der Extraktion erhöhten Temperatur durchgeführt werden.

In vielen Fällen läßt sich die Extraktion mit DEDP selektiv in bezug auf eine bestimmte Spezies durchführen, so daß zahlreiche Trennungen möglich sind.

Aus schwefel- oder salpetersaurer Lösung lassen sich mit DEDP beispielsweise extrahieren:
- Säuren und Metallsalze der 4. bis 7. Hauptgruppe des Periodensystems und des Bors mit Ausnahme des Bleis;
- Säuren und Salze der Metalle der 2. und 4. bis 8. Nebengruppe des Periodensystems, sofern die Oxidationsstufe des Metalls gleich der Gruppennummer G_{M} des Metalls oder der um eins erniedrigten Gruppennummer G_{M}-1 ist (höhere Oxidationsstufe).

Nicht extrahierbar aus schwefel- oder salpetersaurer Lösung sind dagegen beispielsweise:
- Säuren und Salze der Metalle der 2. und 4. bis 8. Nebengruppe des Periodensystems, sofern die Oxidationsstufe des Metalls kleiner als die um eins erniedrigte Gruppennummer G_{M}-1 ist (niedrigere Oxidationsstufe);
- Säuren und Salze der Metalle der 1. bis 3. Hauptgruppe und der 1. Nebengruppe des Periodensystems.

Daraus folgt, daß die Säuren und Metallsalze der 4. bis 7. Hauptgruppe des Periodensystems und des Bors mit Ausnahme des Bleis sowie die Metalle der 2. und 4. bis 8. Nebengruppe des Periodensystems in ihren höheren Oxidationsstufen aus schwefel- oder salpetersaurer Lösung von den nicht extrahierbaren Spezies der Metalle der 2. und 4. bis 8. Nebengruppe in ihren niedrigeren Oxidationsstufen sowie der Metalle der 1. bis 3. Hauptgruppe und der Metalle der 1. Nebengruppe des Periodensystems durch selektive Extraktion getrennt werden können.

Anwendungsmöglichkeiten sind beispielsweise:
- selektive Extraktion von Titan(IV) aus schwefelsauren Laugungs- oder Abfallösungen der TiO₂-Produktionen [Ti(IV) (4. Nebengruppe, höhere Oxidationsstufe G_{M}) wird in Gegenwart von Al(III) (3. Hauptgruppe), Mg(II) (2. Hauptgruppe), Fe(II) (8. Nebenprodukte, niedrigere Oxidationsstufe G_{M}-6), Cr(III) (6. Nebengruppe, niedrigere Oxidationsstufe G_{M}-3) und V(III) (5. Nebengruppe, niedrigere Oxidationsstufe G_{M}-2) selektiv extrahiert].
- selektive Extraktion von Phosphorsäure aus schwefelsauren Laugungslösungen phophathaltiger Mineralien [H₃PO₄ (Säure, 5. Hauptgruppe) wird in Gegenwart von Al(III) (3. Hauptgruppe) und Fe(III) (8. Nebengruppe, niedrigere Oxidationsstufe G_{M}-5) selektiv extrahiert].

Die Erfindung soll anhand der nachfolgenden Beispiele näher erläutert werden.

### Beispiele

### Beispiel 1

### Extraktion von Titan(IV) aus schwefelsaurer Lösung mit DEDP (im Vergleich zu DBBP und DBOP)

Mehrere Lösungen von Titanylsulfat in wäßriger Schwefelsäure mit Anfangsgehalten von 50 bis 70 g Titan/kg Lösung und 1 bis 5 Mol Schwefelsäure/l Lösung werden mit unverdünntem DEDP, DBBP oder DBOP 15 Minuten lang bei Raumtemperatur intensiv gerührt (Phasenverhältnis ca. 1/1). Nach der Phasentrennung werden die wäßrigen Phasen (Raffinate) direkt, die organischen Phasen nach Aufschluß mit H₂SO₄/H₂O₂ auf ihren Titangehalt mittels Atomabsorptionsspektrometrie untersucht. Zur Bestimmung des Säuregehalts werden die wäßrigen Phasen zunächst mit Wasser im Verhältnis 1/100 verdünnt und eine Stunde lang unter Rückfluß erhitzt. Danach wird der Gesamtsäuregehalt durch Titration mit Natronlauge bestimmt. Die Ergebnisse sind in Tabelle 1 aufgeführt.

**Tabelle 1**

| Ergebnisse der Titanextraktion aus schwefelsaurer Lösung mit DEDP, DBBP und DBOP | | | |
|---|---|---|---|
| Extraktionsmittel | Gesamtsäuregehalt Raffinat (berechnet als Mol/l H₂SO₄) | Titangehalt Raffinat (g/kg) | Verteilungskoeffizient Titan C_{organisch}/C_{wäßrig} |
| DEDP | 2,31 | 46 | 0,16 |
| DEDP | 3,41 | 37 | 0,32 |
| DEDP | 4,31 | 31 | 0,47 |
| DEDP | 4,96 | 24 | 0,74 |
| DEDP | 5,60 | 17 | 1,2 |
| DBBP | 2,48 | 65 | 0,009 |
| DBBP | 3,51 | 59 | 0,059 |
| DBBP | 4,53 | 50 | 0,23 |
| DBBP | 4,97 | 43 | 0,41 |
| DBBP | 5,35 | 36 | 0,69 |
| DBOP | 3,49 | 39 | 0,04 |
| DBOP | 4,45 | 33 | 0,15 |
| DBOP | 5,20 | 28 | 0,45 |

### Beispiel 2

### Extraktion von Phosphorsäure mit DEDP (im Vergleich zu TBP)

Die mit Wasser vorbeladenen, unverdünnten Extraktionsmittel werden mit wäßrigen Phosphorsäurelösungen, deren Anfangsgehalt 1 bis 50 % H₃PO₄ beträgt, 15 Minuten lang bei Raumtemperatur intensiv gerührt. Nach der Phasentrennung werden die Säurekonzentrationen der wäßrigen und organischen Phasen durch Titration mit KOH bestimmt. Die Ergebnisse sind Tabelle 2 zu entnehmen.

**Tabelle 2**

| Ergebnisse der Phosphorsäureextraktion mit DEDP und TBP | | |
|---|---|---|
| Extraktionsmittel | Säurekonzentration wäßrige Phase (Mol/l H₃PO₄) | Verteilungskoeffizient H₃PO₄ C_{organisch}/C_{wäßrig} |
| DEDP | 0,393 | 0,38 |
| DEDP | 0,798 | 0,38 |
| DEDP | 1,22 | 0,39 |
| DEDP | 2,70 | 0,37 |
| TBP | 0,480 | 0,10 |
| TBP | 0,766 | 0,12 |
| TBP | 1,453 | 0,17 |
| TBP | 2,993 | 0,24 |

### Beispiel 3

### Extraktion von Salzsäure mit DEDP (im Vergleich zu DBBP und DBOP)

Es wird analog zu Beispiel 2 verfahren, indem die Phosphorsäure durch Salzsäure ersetzt wird. Ergebnisse siehe Tabelle 3.

**Tabelle 3**

| Ergebnisse der Salzsäureextraktion mit DEDP, DBBP und DBOP | | |
|---|---|---|
| Extraktionsmittel | Säurekonzentration wäßrige Phase (Mol/l HCl) | Verteilungskoeffizient HCl C_{organisch}/C_{wäßrig} |
| DEDP | 0,461 | 0,28 |
| DEDP | 1,80 | 0,37 |
| DEDP | 3,43 | 0,41 |
| DBBP | 0,501 | 0,10 |
| DBBP | 1,49 | 0,19 |
| DBBP | 3,22 | 0,34 |
| DBOP | 0,54 | 0,06 |
| DBOP | 1,59 | 0,13 |
| DBOP | 3,47 | 0,25 |

## Patentansprüche

1. Verwendung von Diethyldodecanphosphonat zur Extraktion von Säuren und Metallsalzen aus wäßrigen Lösungen.

2. Verwendung gemäß Anspruch 1, dadurch gekennzeichnet, daß Diethyldodecanphosphonat unverdünnt oder in Verdünnung mit einem organischen Lösungsmittel aus der Gruppe der aliphatischen, alicyclischen oder aromatischen Kohlenwasserstoffe verwendet wird.

3. Verwendung gemäß einem oder mehreren der Ansprüche 1 und 2, dadurch gekennzeichnet, daß Diethyldodecanphosphonat unter Zusatz eines Modifiers wie Isodecanol oder Nonylphenol verwendet wird.

4. Verwendung gemäß einem oder mehreren der Ansprüche 1 bis 3, dadurch gekennzeichnet, daß Diethyldodecanphosphonat im Gemisch mit weiteren Extraktionsmitteln aus der Gruppe der sauren, neutralen oder basischen Extraktionsmittel verwendet wird.

5. Verwendung gemäß einem oder mehreren der Ansprüche 1 bis 4, dadurch gekennzeichnet, daß anorganische Säuren oder organische Säuren aus wäßrigen Lösungen extrahiert werden.

6. Verwendung gemäß einem oder mehreren der Ansprüche 1 bis 4, dadurch gekennzeichnet, daß Säuren und Metallsalze der 4. bis 7. Hauptgruppe des Periodensystems und des Bors mit Ausnahme des Bleis sowie Säuren und Metallsalze der 2. und 4. bis 8. Nebengruppe des Periodensystems, deren Oxidationsstufen der Gruppennummer G_{M} des Nebengruppenmetalls oder der um eins erniedrigten Gruppennummer G_{M}-1 entsprechen, aus schwefel- oder salpetersaurer Lösung extrahiert werden.

7. Verwendung gemäß Anspruch 6, dadurch gekennzeichnet, daß Titanylsulfat aus schwefelsaurer wäßriger Lösung extrahiert wird.

8. Verwendung gemäß Anspruch 6, dadurch gekennzeichnet, daß die Säuren und Metallsalze gemäß Anspruch 6 von Metällsalzen der 2. und 4. bis 8. Nebengruppe des Periodensystems, deren Oxidationsstufen kleiner als G_{M}-1 sind sowie von Metallsalzen der 1. bis 3. Hauptgruppe und der 1. Nebengruppe des Periodensystems durch selektive Extraktion getrennt werden.

9. Verwendung gemäß einem oder mehreren der Ansprüche 1 bis 4, dadurch gekennzeichnet, daß die Metallsalze und Säuren von Scandium, Yttrium, Lanthan, der Lanthaniden sowie der Actiniden bevorzugt aus phosphorsaurer, besonders bevorzugt aus salpetersaurer oder nitrathaltiger Lösung extrahiert werden.

10. Verwendung gemäß einem oder mehreren der Ansprüche 1 bis 4, dadurch gekennzeichnet, daß die Metallsalze und Säuren der 3. bis 7. Hauptgruppe des Periodensystems mit Ausnahme des Aluminiums sowie der 1. bis 3. und 8. Nebengruppe des Periodensystems sowie der Actiniden bevorzugt aus salzsaurer oder chloridhaltiger Lösung extrahiert werden.
